Europäisches Patentamt

**European Patent Office**

Office européen des brevets

(19)

(11) Veröffentlichungsnummer : **0 023 680**
**B1**

(12)          **EUROPÄISCHE PATENTSCHRIFT**

(45) Veröffentlichungstag der Patentschrift :
19.05.82

(51) Int. Cl.³ : **A 23 L   1/22**

(21) Anmeldenummer : **80104389.4**

(22) Anmeldetag : **25.07.80**

(54) Verfahren zur Herstellung von Gewürzextrakten.

(30) Priorität : **02.08.79 DE 2931395**

(43) Veröffentlichungstag der Anmeldung :
**11.02.81 (Patentblatt 81/06)**

(45) Bekanntmachung des Hinweises auf die Patenterteilung : **19.05.82 Patentblatt 82/20**

(84) Benannte Vertragsstaaten :
**AT BE CH FR GB IT LI NL SE**

(56) Entgegenhaltungen :
**DE - A - 1 517 047**
**DE - A - 2 127 611**
**GB - A - 1 476 854**

(73) Patentinhaber : **Henkel Kommanditgesellschaft auf
Aktien-Patentabteilung- Postfach 1100 Henkelstrasse 67
D-4000 Düsseldorf 1 (DE)**

(72) Erfinder : **Behr, Norbert
Kölner Strasse 24
D-5657 Haan (DE)**
Erfinder : **van der Mei, Henk
Schöner Busch 4
D-3269 Rinteln 15 (DE)**
Erfinder : **Sirtl, Wolfgang
Buchholzstrasse 171
CH-1853 Zürich (CH)**
Erfinder : **Schnegelberger, Harald, Dr.
Stieglitzweg 2
D-5653 Leichlingen (DE)**
Erfinder : **von Ettingshausen, Othmar, Dr.
Ackerstrasse 22
D-4000 Düsseldorf-Unterbach (DE)**

Imprimerie Jouve, 18, rue St-Denis, 75001 Paris, France

# 0 023 680

## Verfahren zur Herstellung von Gewürzextrakten

Die Erfindung betrifft die Herstellung von Gewürzextrakten durch Extraktion mit einem gesundheitlich unbedenklichen Gas als Lösungsmittel in zwei Stufen.

Aus der deutschen Patentschrift 2 127 611 ist bereits ein Verfahren zur Herstellung von Gewürzextrakten durch Extraktion mit einem gesundheitlich unbedenklichen Gas als Lösungsmittel in zwei Stufen bekannt, bei dem zunächst die als Geruchskomponenten wirksamen ätherischen Öle durch Extraktion mit trockenem und anschließend die als Geschmacksträger wirkenden Anteile mit feuchtem, in Bezug auf Temperatur und Druck überkritischem Gas, entzogen werden. Diesem bekannten Verfahren haften verschiedene Nachteile an, durch die die Qualität der erhaltenen Gewürzextrakte negativ beeinflußt werden kann. Da in beiden Stufen im überkritischen Temperaturbereich gearbeitet wird, werden die besonders temperatur empfindlichen ätherischen Öle in der ersten Stufe einer starken Temperaturbelastung ausgesetzt. Ferner wird bei dem Verfahren des Standes der Technik bei der Extraktion in zweiter Stufe unter Zusatz von Feuchtigkeit gearbeitet, wodurch unerwünschte Qualitätseinbußen durch Reaktion der Gewürzinhaltstoffe mit dem zugesetzten Wasser eintreten können. Darüber hinaus bedingt die Einschleusung des Wassers eine Öffnung des geschlossenen Extraktionssystems, wodurch die empfindlichen Inhaltsstoffe auch mit Luftsauerstoff in Berührung kommen können. Die Extraktion der ätherischen Öle in der ersten Stufe erfordert, wenn sie annähernd quantitativ erfolgen soll, längere Zeit, das heißt die Produkte werden der höheren Temperatur übermäßig lange ausgesetzt.

Es ist ferner bereits bekannt, Extraktionen mit flüssigem Kohlendioxid durchzuführen, wobei sowohl Druck und Temperatur im unterkritischen Bereich liegen. Bei einem Einsatz dieser Verfahren zur Extraktion von Gewürzen werden aber im allgemeinen nur sehr unbefriedigende Ergebnisse erhalten, da die Ausbeuten an Inhaltsstoffen gering sind und hohe Restwerte im Extraktionsrückstand verbleiben. Es bestand daher die Aufgabe, ein Extraktionsverfahren aufzufinden, das es ermöglicht, die als Geruchskomponenten wirksamen, besonders temperaturempfindlichen ätherischen Öle in möglichst kurzer Zeit unter schonendsten Temperaturbedingungen nahezu quantitativ zu extrahieren, das heißt auf einfache Weise eine Fraktionierung der Geruchskomponenten von den Geschmacksträgern zu erreichen. Ferner sollte eine Extraktion der Geschmacksträger in dem gleichen geschlossenen System ohne die Zugabe von Wasser ermöglicht werden, um auch hierbei alle ungünstigen Einwirkungen auszuschließen.

Diese Aufgabe wird dadurch gelöst, daß man zur Herstellung von Gewürzextrakten durch Extraktion mit einem gesundheitlich unbedenklichen Gas als Lösungsmittel ein Zweistufenverfahren anwendet, bei dem man den Gewürzen die als Geruchskomponenten wirkenden ätherischen Öle in erster Stufe mit flüssigem, hinsichtlich der Temperatur im unterkritischen und hinsichtlich des Druckes im überkritischen Bereich befindlichen Gases, und die als Geschmacksträger wirkenden Anteile in zweiter Stufe mit dem gleichen, sowohl hinsichtlich der Temperatur als auch des Druckes im überkritischen Bereich befindlichen Gases, entzieht, die Extrakte aus den erhaltenen Lösungen durch Druck- und/oder Temperaturänderung abscheidet und gegebenenfalls untereinander vermischt.

Als Extraktionsmittel wird insbesondere Kohlendioxid eingesetzt, jedoch lassen sich an Stelle von Kohlendioxid auch andere gesundheitlich unbedenkliche Gase wie Distickstoffoxid, Trifluormethan, Trifluormonochlormethan oder Ethan verwenden. Ein kombinierter Einsatz der genannten Gase nebeneinander ist gleichfalls möglich.

Die Durchführung des erfindungsgemäßen Verfahrens erfolgt im wesentlichen in zwei Stufen, denen gegebenenfalls noch eine dritte Stufe nachgeschaltet werden kann.

1. Stufe : Entzug der als Geruchskomponenten wirksamenätherischen Öle durch Behandlung der Gewürze mit flüssigem Kohlendioxid, das sich in bezug auf die Temperatur im unterkritischen, in bezug auf den Druck im überkritischen Zustand befindet.

Die verfahrensgemäß entzogenen ätherischen Öle werden im Separationsbehälter abgeschieden.

Parameter im Extraktionsbehälter :

$$P_1 > P \text{ kritisch}$$
$$T_1 < T \text{ kritisch}$$

Parameter im Separationsbehälter :

Im Separationsbehälter werden die Bedingungen so gewählt, daß sich das Extraktionsgut quantitativ niederschlägt, zum Beispiel

$$P_2 < P_1 < P \text{ kritisch}$$
$$T_2 < T_1 < T \text{ kritisch}$$

2. Stufe : Entzug der als Geschmacksträger wirkenden Anteile durch Behandlung der in erster Stufe von den ätherischen Ölen befreiten Gewürze mit trockenem, überkritischem Kohlendioxid. Die verfahrensgemäß entzogenen Geschmacksträger werden im Separationsbehälter abgeschieden.

Parameter im Extraktionsbehälter :

$P_1 > P$ kritisch

$T_1 > T$ kritisch

Parameter im Separationsbehälter :

Im Separationsbehälter werden die Bedingungen so gewählt, daß sich das Extraktionsgut quantitativ niederschlägt, zum Beispiel

$P_2 < P_1 < P$ kritisch

$T_2 < T_1 < T$ kritisch

Diesen zwei erfindungsgemäßen Extraktionsstufen kann gegebenenfalls bei Bedarf noch eine dritte Extraktionsstufe nachgeschaltet werden.

3. Stufe : Entzug der rein wasserlöslichen Anteile wie Polysaccharide, Farbstoffe usw., soweit sie nicht bereits in den beiden ersten Extraktionsstufen abgeschieden werden, durch Behandlung der in erster und zweiter Stufe weitestgehend von ätherischen Ölen und Geschmacksträgern befreiten Gewürze mit Wasser.

An die Stelle des in der 1. und 2. Stufe genannten Kohlendioxids kann auch eines der anderen genannten Gase treten.

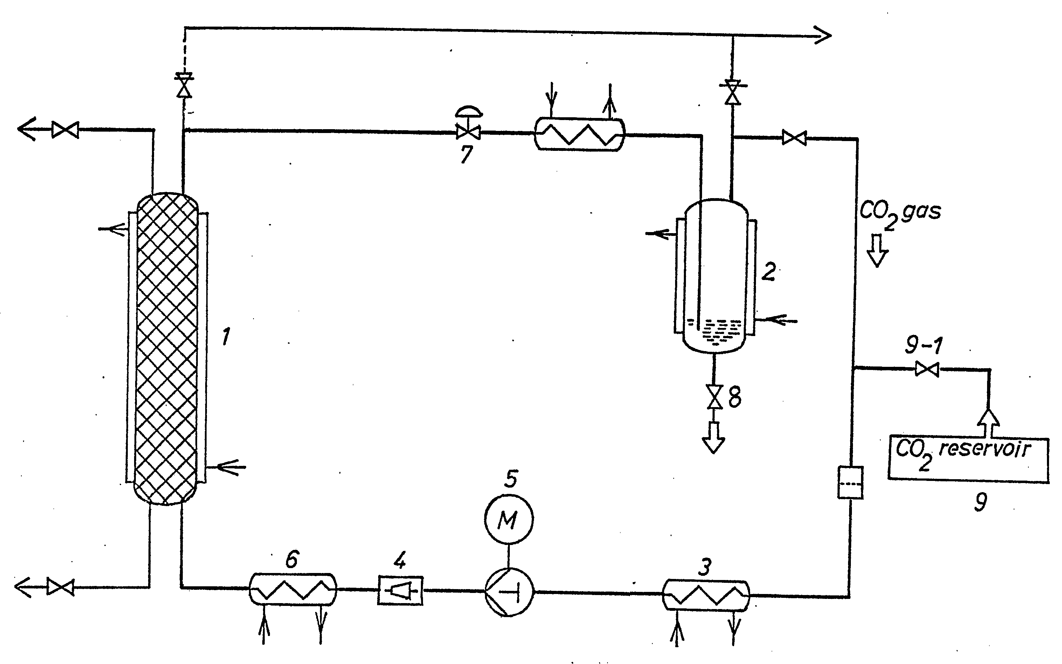

Die Arbeitsweise des erfindungsgemäßen Verfahrens wird nachstehend und an Hand der Zeichnung näher erläutert :

Das gemahlene oder grob zerkleinerte Gewürz wird in den Extraktionsbehälter (1) gegeben, und im Anschluß daran mittels der Flüssiggaspumpe (5) das Extraktionsmittel (Flüssiggas) vom Vorratstank (9) über den Wärmeaustauscher (6) in den Extrakteur (1) eingefüllt. Der Wärmeaustauscher temperiert dabei das Lösungsmittel auf die entsprechende Extraktionstemperatur. Ist nach einer bestimmten Anfahrzeit der gewünschte Extraktionsdruck erreicht, so öffnet das Druckregelventil (7) und entspannt einen Teil des vom Extraktionsbehälter kommenden, mit Extraktstoff beladenen Flüssiggases in den Separator (2).

Das Druckregelventil arbeitet dabei in der Weise, daß es nur die Menge an Flüssiggas entspannt, wie von der Pumpe (5) nachgefördert wird. Dadurch erreicht man im Extraktionsbehälter einen nahezu konstanten Extraktionsdruck. Im Separator (2) findet die Trennung der vorher im Flüssiggas gelösten Stoffe durch Druck- und/oder Temperaturänderung statt ; z.B. auf Drucksenkung auf Werte unterhalb des kritischen Druckes des Flüssiggases ; die vom Flüssiggas getrennten Stoffe sammeln sich am Boden des Separators, wo sie direkt am Bodenablaßventil (8) abgezogen werden können.

Ist im Separator der Entmischungsdruck erreicht, wird das Tankventil (9-1) geschlossen und am Kopf des Separators kann nun das von Extraktstoffen befreite Gas abgezogen werden, welches durch den Verflüssiger (3) vollständig verflüssigt mittels Flüssiggaspumpe (5) wieder in den Extraktionskreislauf zurückgeführt wird. Die Messung der umlaufenden Flüssiggasmenge erfolgt mittels Durchflußmeßgerät (4). Durch mehrmaliges Wiederholen des Kreislaufes erreicht man so eine vollständige Extraktion der Gewürzinhaltsstoffe aus dem Gewürz.

Bei dieser Arbeitsweise wird in der ersten Stufe mit $P_1 > P$ kritisch, $T_1 < T$ kritisch, zur Extraktion der Geruchskomponenten und in der zweiten Stufe mit $P_1 > P$ kritisch, $T_1 > T$ kritisch, zur Extraktion der Geschmacksträger, gefahren. Dabei läßt sich eine weitestgehende Extraktion sowohl in der ersten als auch in der zweiten Stufe in verhältnismäßig kurzer Zeit bewerkstelligen.

Ist noch ein Entzug rein wasserlöslicher Anteile wie Polysaccharide, Farbstoffe usw. erwünscht, so wird eine Extraktion mit Wasser im Anschluß an die beiden genannten Schritte vorgenommen. Der Rohstoff wird dabei in bekannter Weise mit Wasser extrahiert, der erhaltene Extrakt wird danach eingeengt, sprühgetrocknet oder gefriergetrocknet und kann in dieser Form dem gewünschten Verwendungszweck zugeführt werden.

Die sich durch das erfindungsgemäße Verfahren ergebenden Vorteile sind mannigfacher Art. Durch die Behandlung der Gewürze in der ersten Stufe mit dem flüssigen Gas im überkritischen Druckbereich aber unterkritischen Temperaturbereich, werden die besonders temperaturempfindlichen ätherischen Öle unter schonendsten Bedingungen extrahiert und es werden qualitativ hochwertige Produkte erhalten. Die Extraktion durchläuft beide Stufen des erfindungsgemäßen Verfahrens in dem gleichen geschlossenen System ohne zusätzliche Eindosierung von Wasser. Durch die Kombination der beiden Stufen ohne zwischenzeitliche Öffnung des Extraktions- und Expansionsbehälters ist eine Gewinnung der Geruchskomponenten und Geschmacksträger praktisch in einem Arbeitsgang möglich, ohne daß das empfindliche Material mit Luftsauerstoff oder Wasser in Berührung kommt. Ein weiterer Vorteil ergibt sich dadurch, daß ohne Öffnung des Extraktionsbehälters, wie dies zur Schleppmittelzugabe normalerweise üblich ist, aber Wechseln der Vorlage am Expansionsbehälter nach der ersten Stufe eine Auftrennung der Inhaltsstoffe in die als Geruchskomponenten wirksamen ätherischen Öle und in die Geschmacksträger möglich ist. Als weitere Vorteile des erfindungsgemäßen Verfahrens können noch Erhaltung der natürlichen Antioxidantien sowie starke Reduzierung der Keimzahlen bzw. Ausscheiden besonders unerwünschter Keime, wie Schimmelpilze genannt werden.

3

**0 023 680**

Beispiele

1. Extraktion von schwarzem Pfeffer « Madagascar »

Die Extraktion wurde wie vorstehend beschrieben mittels Kohlendioxid in zwei Stufen durchgeführt. Die Parameter für Druck und Temperatur für beide Stufen sowohl im Extraktions- als auch im Expansionsgefäß werden nachstehend aufgeführt. Es wurde in der ersten Stufe ein bei Raumtemperatur flüssiger, aromatisch riechender Extrakt erhalten, der reich an ätherischem Öl und arm an Piperin, dem sogenannten « scharfen Prinzip » des Pfeffers war. In der zweiten Stufe wurde ein bei Raumtemperatur fester, scharf und brennend schmeckender Extrakt mit wenig ätherischem Öl und viel Piperin erhalten.

Versuchsbedingungen : 1. Stufe
  Extraktionsgefäß :  $P_1 = 300$ bar   $T_1 = 28\text{-}30\,°C$
  Expansionsgefäß :  $P_2 = \phantom{0}40$ bar   $T_2 = 23\text{-}27\,°C$
  Extraktionszeit :   3 1/2 Stunden
Versuchsbedingungen : 2. Stufe
  Extraktionsgefäß :  $P_1 = 350$ bar   $T_1 = 54\text{-}55\,°C$
  Expansionsgefäß :  $P_2 = 55\text{-}65$ bar   $T_2 = 38\text{-}66\,°C$
  Extraktionszeit :   3 Stunden

Folgende Extraktausbeuten wurden erzielt, in %-Angaben bezogen auf das Ausgangsmaterial. Auch in allen folgenden Beispielen sind die angegebenen %-Extraktangaben auf das Ausgangsmaterial bezogen.
  Extraktion in 1. Stufe :
  Wasserfreier Extrakt : 4,5 %, davon ätherisches Öl : 2,1 %, Piperin : 0,9 %.
  Extraktion in 2. Stufe :
  Wasserfreier Extrakt : 6,4 %, davon ätherisches Öl : 0,1 %, Piperin : 6,3 %.
  Gesamt : wasserfreier Extrakt : 10,9 %, davon ätherisches Öl : 2,2 %, Piperin : 7,2 %.
  Wie dem Extraktionsergebnis zu entnehmen ist, ist nach dem erfindungsgemäßen Verfahren eine weitgehende Fraktionierung in Geruchskomponenten und Geschmacksträger ohne besonderen Aufwand möglich.

2. Extraktion von schwarzem Pfeffer « Madagascar »

Es wurde entsprechend Beispiel 1 unter geänderten.
Versuchsbedingungen gearbeitet. Lösungsmittel $CO_2$.

Versuchsbedingungen : 1. Stufe
  Extraktionsgefäß :  $P_1 = 300$ bar   $T_1 = 29\text{-}30\,°C$
  Expansionsgefäß :  $P_2 = 35\text{-}40$ bar   $T_2 = 23\text{-}27\,°C$
  Extraktionszeit :   2 Stunden
Versuchsbedingungen : 2. Stufe
  Extraktionsgefäß :  $P_1 = 312$ bar   $T_1 = 55\text{-}58\,°C$
  Expansionsgefäß :  $P_2 = 55\text{-}60$ bar   $T_2 = 43\text{-}50\,°C$
  Extraktionszeit :   2 Stunden

Extraktausbeuten : 1. Stufe
Wasserfreier Extrakt : 3,6 %, davon ätherisches Öl : 2,1 %, Piperin : 0,6 %.
Extraktausbeuten : 2. Stufe
Wasserfreier Extrakt : 6,9 %, davon ätherisches Öl : 0,7 %, Piperin : 5,2 %.
Gesamt : Wasserfreier Extrakt : 10,5 %, davon ätherisches Öl : 2,8 %, Piperin : 5,8 %.
Zum Vergleich wurde eine Extraktion von schwarzem Pfeffer « Madagascar » nach einem Verfahren des Standes der Technik durchegeführt. Hierbei wurde in beiden Stufen sowohl im Druckbereich als auch im Temperaturbereich überkritisch gefahren, wobei in der zweiten Stufe ein Zusatz von Wasser in Höhe von 50 % des Ausgangsmaterials erfolgte. Lösungsmittel $CO_2$.

Versuchsbedingungen : 1. Stufe
  Extraktionsgefäß :  $P_1 = 350$ bar   $T_1 = 55\text{-}59\,°C$
  Expansionsgefäß :  $P_2 = 60\text{-}65$ bar   $T_2 = 40\text{-}51\,°C$
  Extraktionszeit :   3 Stunden
Versuchsbedingungen : 2. Stufe + 50 % Wasser
  Extraktionsgefäß :  $P_1 = 350$ bar   $T_1 = 55\text{-}62\,°C$
  Expansionsgefäß :  $P_2 = 40\text{-}70$ bar   $T_2 = 41\text{-}55\,°C$
  Extraktionszeit :   2 Stunden
  Extraktausbeuten : 1. Stufe

4

Wasserfreier Extrakt : 10,4 %, davon ätherisches, Öl : 1,1 %, Piperin : 8,2 %.
Extraktausbeuten : 2. Stufe
Wasserfreier Extrakt : 1 %, davon, Piperin : 1 %.
Gesamt : Wasserfreier Extrakt : 11,4 %, davon ätherisches Öl : 1,1 %, Piperin : 9,2 %.

Wie dem Vergleichsversuch zu entnehmen ist, wird nach dem Verfahren des Standes der Technik etwa die gleiche Gesamtausbeute an wasserfreiem Extrakt erzielt, jedoch ließ sich keine Fraktionierung der Komponenten erzielen.

3. Extraktion von Fenchel

Die Extraktion erfolgte unter Einhaltung nachstehender Versuchsbedingungen. Lösungsmittel $CO_2$.

1. Stufe :
Extraktionsgebäß : $P_1 = 130$ bar    $T_1 = 30\,°C$
Expansionsgefäß : $P_2 = 40\text{-}45$ bar    $T_2 = 20\text{-}22\,°C$
Extraktionszeit :    2 Stunden
2. Stufe :
Extraktionsgefäß : $P_1 = 300$ bar    $T_1 = 42\,°C$
Expansionsgefäß : $P_2 = 40$ bar    $T_2 = 21\,°C$
Extraktionszeit :    3 Stunden

Extraktausbeuten : 1. Stufe
Wasserfreier Extrakt 9,0 %, davon ätherisches Öl : 5,6 % (4,5 % Anethol, 0,44 % Fencheen).
Extraktausbeuten : 2. Stufe
Wasserfreier Extrakt 8,2 %, davon ätherisches Öl : 0 %.
Gesamt : Wasserfreier Extrakt : 17,2 %, davon ätherisches Öl : 5,6 %.

4. Extraktion von Ingwer

Es wurde unter folgenden Versuchsbedingungen extrahiert : Lösungsmittel $CO_2$.

1. Stufe :
Extraktionsgefäß : $P_1 = 280$ bar    $T_1 = 29\,°C$
Expansionsgefäß : $P_2 = 35$ bar    $T_2 = 22\text{-}24\,°C$
Extraktionszeit :    2 Stunden
2. Stufe :
Extraktionsgefäß : $P_1 = 350$ bar    $T_1 = 52\text{-}55\,°C$
Expansionsgefäß : $P_2 = 52\text{-}55$ bar    $T_2 = 40\,°C$
Extraktionszeit :    2 Stunden
Extraktausbeuten : 1. Stufe
Wasserfreier Extrakt : 4,7 %, davon ätherisches Öl : 2,2 %, Zingeron : 0,3 %.
Bei diesem Versuch wurden bereits in der ersten Stufe die gesamten Extrahierbaren Inhaltsstoffe extrahiert, so daß in der zweiten Stufe kein meßbarer Extrakt erhalten wurde.

5. Extraktion von Salbei

Als Lösungsmittel diente wiederum $CO_2$ unter folgenden Versuchsbedingungen :
1. Stufe :
Extraktionsgefäß : $P_1 = 140$ bar    $T_1 = 30\,°C$
Expansionsgefäß : $P_2 = 40$ bar    $T_2 = 20\,°C$
Extraktionszeit :    2 1/2 Stunden.
2. Stufe :
Extraktionsgefäß : $P_1 = 160$ bar    $T_1 = 38\,°C$
Expansionsgefäß : $P_2 = 40$ bar    $T_1 = 25\,°C$
Extraktionszeit :    2 1/2 Stunden.

Extraktausbeuten : 1. Stufe
Wasserfreier Extrakt : 4,1 %, davon ätherisches Öl :3,1 %.
Extraktausbeuten 2. Stufe
Wasserfreier Extrakt : 1,95 %, davon ätherisches Öl : 0,05 %.
Gesamt : Wasserfreier Extrakt : 6,05 %, davon ätherisches Öl : 3,15 %.

6. Extraktion von Nelken « Sansibar »

Die Extraktion erfolgte mit $CO_2$ folgenden Bedingungen :

1. Stufe :

Extraktionsgefäß :  $P_1 = 315$ bar  $T_1 = 28\,°C$
Expansionsgefäß :  $P_2 = 40$ bar  $T_2 = 24\,°C$
Extraktionszeit :  $P_2$ Stunden

2. Stufe :

Extraktionsgefäß : :  $P_2 = 40$ bar  $T_2 = 23\,°C$
Extraktionszeit :  2 Stunden

Extraktausbeuten : 1. Stufe
Wasserfreier Extrakt : 12,6 %, davon ätherisches Öl 10,5 %.
Extraktausbeuten : 2. Stufe
Wasserfreier Extrakt 2,5 %, davon ätherisches Öl 0,3 %,
Gesamt : Wasserfreier Extrakt : 15,1 %, davon ätherisches Öl : 10,8 %.

## Ansprüche

1. Verfahren zur Herstellung von Gewürzextrakten durch Extraktion mit einem gesundheitlich unbedenklichen Gas als Lösungsmittel in zwei Stufen, dadurch gekennzeichnet, daß man den Gewürzen die als Geruchskomponenten wirkenden ätherischen Öle in erster Stufe mit flüssigem, hinsichtlich der Temperatur im unterkritischen und hinsichtlich des Druckes im überkritischen Bereich befindlichen Gases, und die als Geschmacksträger wirkenden Anteile in zweiter Stufe mit dem gleichen, sowohl hinsichtlich der Temperatur als auch des Druckes im überkritischen Bereich befindlichen Gases, entzieht, die Extrakte aus den erhaltenen Lösungen durch Druck- und/oder Temperaturänderung abscheidet und gegebenenfalls miteinander vermischt.

2. Verfahren nach Anspruch 1, dadurch gekennzeichnet, daß man die nach dem zweistufigen Verfahren weitgehend von Geruchs- und Geschmacksstoffen befreiten Gewürze einer zusätzlichen wäßrigen Extraktion zur Gewinnung von Polysacchariden, Farbstoffen, soweit sie nicht in den beiden ersten Stufen entfernt worden sind, unterwirft.

3. Verfahren nach Anspruch 1, dadurch gekennzeichnet, daß man Kohlendioxid als Lösungsmittel verwendet.

4. Verfahren nach Anspruch 1, dadurch gekennzeichnet, daß man Distickstoffoxid, Trifluormethan, Trifluormonochlormethan oder Ethan neben oder an Stelle von Kohlendioxid verwendet.

## Claims

1. A process for the production of spice extracts by extraction with a physiologically acceptable gas as a solvent in two stages, characterised in that the ethereal oils acting as odour component are removed from the spices in the first stage using a liquid gas of which the temperature is in the subcritical range and the pressure in the supercritical range whilst the flavour components are removed in the second stage using the same gas of which the temperature and pressure are both in the supercritical range, the extracts are separated off from the solutions obtained by changing the pressure and/or temperature and optionally mixed with one another.

2. A process as claimed in Claim 1, characterised in that the spices largely freed from odour and flavour components in the two-stage process are subjected to an additional aqueous extraction to remove polysaccharides and dyes where they have not been removed in the first two stages.

3. A process as claimed in Claim 1, characterised in that carbon dioxide is used as the solvent.

4. A process as claimed in Claim 1, characterised in that nitrogen dioxide, trifluoromethane, trifluoromonochloromethane or ethane is used in addition to or instead of carbon dioxide.

## Revendications

1. Procédé de préparation d'extraits d'épices par extraction à l'aide d'un gaz dépourvu de nocivité qui sert de solvant en deux stades opératoires, caractérisé en ce que l'on extrait des épices les huiles essentielles, composants odorants, au premier stade opératoire par un gaz liquéfié à une température inférieure à la température critique et à une pression supérieure à la pression critique et on extrait les composants rapides au deuxième stade opératoire avec le même gaz à une température supérieure à la température critique et à une pression supérieure à la pression critique, on sépare les extraits des solutions obtenues par variation de la pression et/ou de la température et le cas échéant on les mélange entre eux.

2. Procédé selon la revendication 1, caractérisé en ce que les épices pratiquement débarrassées des composants odorants et rapides après le procédé en deux stades sont soumises à une extraction aqueuse supplémentaire pour séparation des polysaccharides, des colorants, lorsqu'ils n'ont pas déjà été éliminés

6

dans les deux premiers stades opératoires.

3. Procédé selon la revendication 1, caractérisé en ce que l'on utilise comme solvant l'anhydride carbonique.

4. Procédé selon la revendication 1, caractérisé en ce que l'on utilise à la place de l'anhydride carbonique le protoxyde d'azote, le trifluorométhane, le trifluoromonochlorométhane ou l'éthane.